# FASCICULE DE BREVET EUROPEEN

(11) **EP 0 773 617 B1**
(45) Date de publication et mention de la délivrance du brevet: **24.01.2001**
(21) Numéro de dépôt: 96402287.5
(22) Date de dépôt: 28.10.1996
(51) Int. Cl.: H02G 5/06

(54) **Ligne de transport électrique enterrée equipée d'un dispositif de refroidissement**
Unterirdisch Stromleiter mit einer Kühlvorrichtung
Underground conduit for electric transmission equipped with a cooling device

(30) Priorité: 07.11.1995 FR 9513155
(43) Date de publication de la demande: 14.05.1997
(73) Titulaire: GEC ALSTHOM T & D SA, 75116 Paris (FR)
(72) Inventeur: Thuries, Edmond, 69330 Meyzieu (FR)
(74) Mandataire: Gosse, Michel

(56) Documents cités:
- AU-B- 7 710 187
- DE-A- 2 532 534
- FR-A- 2 251 116
- GB-A- 1 190 925
- US-A- 3 621 108
- PATENT ABSTRACTS OF JAPAN vol. 4, no. 179 (M-046), 11 Décembre 1980 & JP 55 126765 A (SHIMODA HIROSHI), 30 Septembre 1980,

## Description

La présente invention se rapporte à un dispositif de refroidissement pour ligne de transport électrique enterrée.

Elle concerne plus précisément une ligne blindée de transport d'énergie enterrée et comportant dans une enveloppe métallique au moins une barre conductrice, cette ligne étant équipée d'un dispositif de refroidissement par transfert de chaleur de ladite enveloppe vers la surface du sol constitué d'une structure métallique fixée à ladite enveloppe à l'extérieur de celle-ci et s'étendant vers la surface du sol.

Une telle ligne blindée de transport électrique haute tension isolée au gaz sous pression comprenant une pluralité de tronçons assemblés et comprenant au moins une barre conductrice maintenue en place dans une enveloppe cylindrique est décrite dans la demande de brevet français FR-A-2 692 084 déposée le 3 juin 1992 par la Déposante.

Une telle ligne blindée est conçue pour être enterrée à une certaine profondeur, par exemple de l'ordre d'un mètre, pour fonctionner optimalement sans échauffement. Or compte-tenu du vallonnement d'un terrain, il est inévitable qu'au moins pour certains tronçons la ligne se trouve à une profondeur supérieure à cette profondeur optimale. En ces tronçons, sans équipement spécial, peut apparaître un échauffement préjudiciable.

Il est connu du document de brevet FR-2 251 116 d'associer à l'enveloppe des échangeurs de chaleur comportant des conduites tubulaires métalliques qui évacuent dans un fluide caloporteur la chaleur résultant des pertes. Ces échangeurs sont de fabrication particulièrement onéreuse.

Pour résoudre ce problème, conformément à l'invention, ladite structure comprend une pluralité de premières plaques verticales reliées à l'enveloppe et de dimension verticale déterminée pour que leur côté supérieur soit à une profondeur calculée admissible.

Selon un premier mode de réalisation, lesdites premières plaques sont reliées radialement à l'enveloppe et perpendiculaires à l'axe longitudinal de l'enveloppe.

Selon un second mode de réalisation, lesdites premières plaques sont reliées à l'enveloppe et parallèles à l'axe longitudinal de l'enveloppe.

De préférence, lesdites premières plaques sont emboîtées chacune dans une fente d'une deuxième plaque destinée à être disposée horizontalement sensiblement à ladite profondeur admissible.

Avantageusement, les premières plaques sont soudées sur une troisième plaque support fixée le long de la génératrice supérieure de l'enveloppe.

L'invention est décrite ci-après plus en détail à l'aide de figures ne représentant qu'un mode de réalisation préféré de l'invention.

La figure 1 est une vue en perspective partiellement arrachée d'une ligne de transport électrique à laquelle s'applique l'invention.

La figure 2 est une vue en perspective partielle d'un tronçon de ligne équipée d'un dispositif de refroidissement conforme à un premier mode de réalisation de l'invention.

La figure 3 est une vue en perspective partielle d'un tronçon de ligne équipée d'un dispositif de refroidissement conforme à un second mode de réalisation de l'invention.

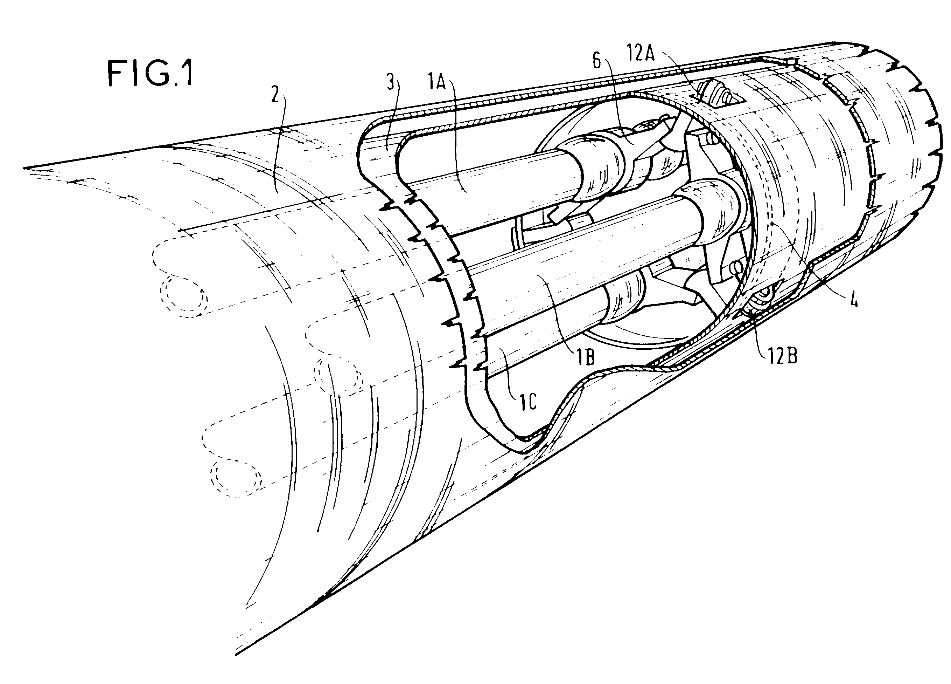

Sur la figure 1, les références 1A, 1B et 1C désignent trois barres conductrices, par exemple en aluminium, tubulaires, et de section adaptée à l'intensité du courant transité. Selon ce mode de réalisation, la ligne est triphasée, mais elle peut être également monophasée.

Les barres sont disposées à l'intérieur d'une enveloppe tubulaire en acier 2, rempli d'un gaz diélectrique de préférence de l'azote sous une pression de 8 à 15 hecto pascals. Le tube en acier est étanche vis-à-vis du milieu extérieur.

La résultante du champ magnétique dû au passage dans les conducteurs d'un courant triphasé équilibré est quasi nulle à une distance de plusieurs mètres, de sorte que la ligne électrique ne présente aucun danger pour les personnes habitant à proximité, même si la ligne est simplement placée dans un caniveau.

Mais, à la faible distance à laquelle se trouvent les conducteurs du tube en acier, le champ magnétique reste important et pour éviter les pertes par courant de Foucault dans le tube en acier, une enveloppe tubulaire en aluminium 3, de faible épaisseur, est disposée coaxialement au tube en acier, autour des barres conductrices.

De place en place le long du tube en aluminium, sont placés des colliers 4, de préférence en métal amagnétique et possédant trois bras à 120 degrés les uns des autres, dirigés axialement vers l'axe de la ligne et portant des supports isolants 6 maintenant en place les barres conductrices 1.

Le collier 4 présente, de préférence au droit des bras, des paires de joues, venues de moulage, permettant de loger des roulettes 12A, 12B permettant le roulement du tube 3 sur la paroi interne du tube en acier.

Grâce à l'enveloppe en aluminium, les pertes dans le tube en acier sont réduites notablement.

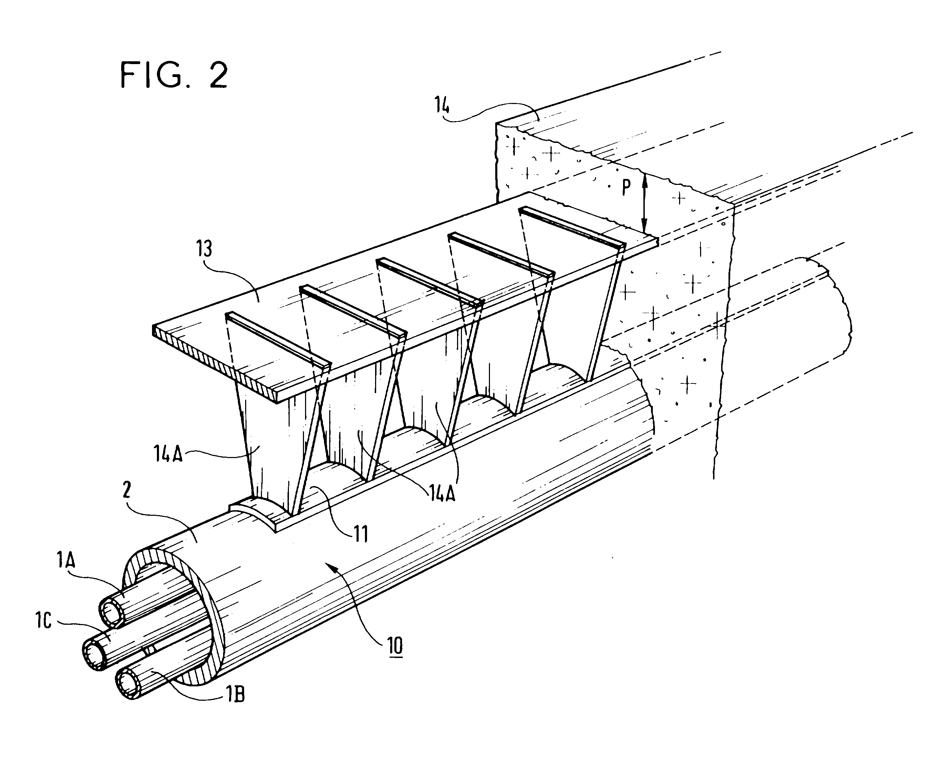

Sur la figure 2, est représentée une telle ligne 10 équipée d'un premier mode de réalisation du dispositif de refroidissement par transfert de chaleur de l'enveloppe 2 externe de la ligne vers la surface du sol 14.

Le long de la génératrice supérieure de l'enveloppe 2, est fixée une structure métallique comprenant une pluralité de premières plaques 14A formées d'ailettes de forme trapézoïdale de largeur augmentant vers la surface du sol 14, reliées radialement à l'enveloppe 2 et perpendiculaires à l'axe longitudinal de l'enveloppe 2. Leur longueur est déterminée pour que leur côté supérieur soit à une profondeur P calculée admissible.

A cette profondeur P, est posée horizontalement une deuxième plaque 13 présentant des fentes de même pas que les ailettes 14A dans lesquelles ces dernières sont emboîtées.

De préférence, les ailettes 14A et la plaque 13 sont en aluminium ou en acier.

Avantageusement, les ailettes 14A sont soudées sur une troisième plaque 11 support en forme de selle de cheval fixée le long de la génératrice supérieure de l'enveloppe 2. Cette plaque 11 est de préférence en acier oxydé et/ou verni collé sur l'enveloppe en acier 2.

Le pas des ailettes 14A est déterminé en fonction des caractéristiques techniques de la ligne blindée et à titre d'exemple peut être supérieur ou égal à 10 cm, chaque ailette 14A ayant une épaisseur d'environ 10 mm. La longueur d'une troisième plaque 11 peut quant à elle être de l'ordre de 2 m, plusieurs plaques 11 équipées d'ailettes 14A pouvant être aboutées sur le tronçon de ligne à pourvoir du dispositif de refroidissement.

La mise en place sur site de la ligne ainsi équipée est la suivante.

Le tronçon de ligne est posé de façon connue en fond de tranchée. La plaque support 11 et les ailettes soudées 14A sont fixées sur le tronçon. De la terre tamisée récupérée est déversée et compactée sur la ligne à un niveau légèrement au-dessus des bords supérieurs des ailettes 14A. Une fine couche de cette terre est alors enlevée pour dégager les bords supérieurs des ailettes 14A et la plaque fendue 13 est mise en place. La tranchée est enfin comblée jusqu'au niveau du sol 14.

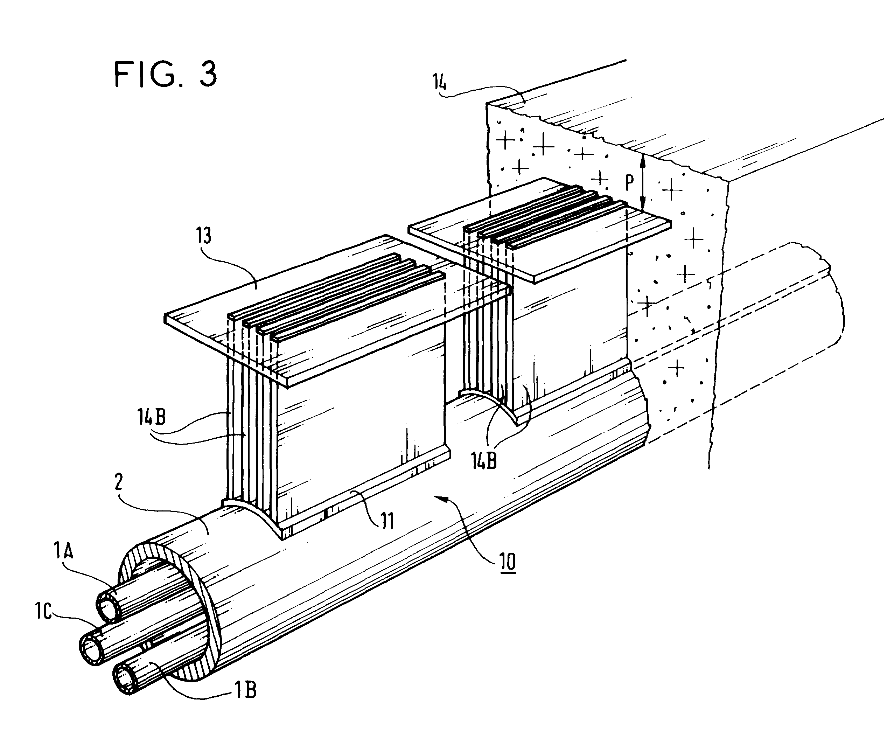

Sur la figure 3, est représentée une telle ligne 10 équipée d'un second mode de réalisation du dispositif de refroidissement par transfert de chaleur de l'enveloppe 2 externe de la ligne vers la surface du sol 14.

Le long de la génératrice supérieure de l'enveloppe 2, est fixée une structure métallique comprenant une pluralité de premières plaques 14B formées d'ailettes de forme rectangulaire, reliées à l'enveloppe 2 et parallèles à l'axe longitudinal de l'enveloppe 2. Leur largeur est déterminée pour que leur côté supérieur soit à une profondeur P calculée admissible.

A cette profondeur P, est posée horizontalement une deuxième plaque 13 présentant des fentes de même pas que les ailettes 14B dans lesquelles ces dernières sont emboîtées.

De préférence, les ailettes 14B et la plaque 13 sont en aluminium.

Avantageusement, les ailettes 14B sont soudées sur une troisième plaque 11 support en forme de selle de cheval fixée le long de la génératrice supérieure de l'enveloppe 2. Cette plaque 11 est de préférence en acier oxydé et/ou verni collé sur l'enveloppe en acier 2.

Le pas des ailettes 14B est déterminé en fonction des caractéristiques techniques de la ligne blindée et à titre d'exemple peut être supérieur ou égal à 10 cm, chaque ailette 14A ayant une épaisseur d'environ 10 mm. La longueur d'une troisième plaque 11 peut quant à elle être de l'ordre de 2 m, plusieurs plaques 11 équipées d'ailettes 14B pouvant être aboutées sur le tronçon de ligne à pourvoir du dispositif de refroidissement.

La mise en place sur site de la ligne ainsi équipée est la suivante.

Le tronçon de ligne est posé de façon connue en fond de tranchée. La plaque support 11 et les ailettes soudées 14B sont fixées sur le tronçon. De la terre tamisée récupérée est déversée et compactée sur la ligne à un niveau légèrement au-dessous des bords supérieurs des ailettes 14B au moyen d'un rouleau pourvu de nervures s'encastrant entre les ailettes 14B. La plaque fendue 13 est mise en place. La tranchée est enfin comblée jusqu'au niveau du sol 14.

## Revendications

1. Ligne blindée de transport d'énergie enterrée et comportant dans une enveloppe métallique (2) au moins une barre conductrice (1A, 1B, 1C), cette ligne étant équipée d'un dispositif de refroidissement par transfert de chaleur de ladite enveloppe (2) vers la surface du sol (14) constitué d'une structure métallique fixée à ladite enveloppe (2) à l'extérieur de celle-ci et s'étendant vers la surface du sol (14), caractérisée en ce que ladite structure comprend une pluralité de premières plaques (14A) verticales reliées à l'enveloppe (2) et de dimension verticale déterminée pour que leur côté supérieur soit à une profondeur calculée admissible.

2. Ligne selon la revendication 1, caractérisée en ce que lesdites premières plaques (14A) sont reliées radialement à l'enveloppe (2) et perpendiculaires à l'axe longitudinal de l'enveloppe (2).

3. Ligne selon la revendication 1, caractérisée en ce que lesdites premières plaques (14B) sont reliées à l'enveloppe (2) et parallèles à l'axe longitudinal de l'enveloppe (2).

4. Ligne selon la revendication 2 ou 3, caractérisée en ce que lesdites premières plaques (14A, 14B) sont chacune emboîtées dans une fente d'une deuxième plaque (13) destinée à être disposée horizontalement sensiblement à ladite profondeur admissible.

5. Ligne selon l'une des revendications précédentes, caractérisée en ce que les premières plaques (14A, 14B) sont soudée sur une troisième plaque support (11) fixée le long de la génératrice supérieure de l'enveloppe (2).

6. Ligne selon la revendication 1, caractérisée en ce que lesdites premières plaques (14A) sont en aluminium.

7. ligne selon la revendication 1, caractérisée en ce que lesdites premières plaques (14A) sont en acier.

## Patentansprüche

1. Abgeschirmte unterirdische Energietransportleitung, die in einer metallischen Hülle (2) wenigstens einen leitfähigen Stab (1A, 1B, 1C) aufweist, wobei diese Leitung mit einer Kühlvorrichtung zur Kühlung durch Wärmeübertragung von der Hülle (2) zur Erdoberfläche (14) ausgestattet ist, die durch eine an der Hülle (2) außerhalb von dieser befestigte Metallstruktur gebildet ist, die sich bis zur Erdoberfläche (14) erstreckt, dadurch gekennzeichnet, dass die Struktur eine Mehrzahl von mit der Hülle (2) verbundenen ersten vertikalen Platten (14A) mit einer vertikalen Abmessung umfasst, die so bestimmt ist, dass sich ihre Oberkante in einer berechneten zulässigen Tiefe befindet.

2. Leitung nach Anspruch 1, dadurch gekennzeichnet, dass die ersten vertikalen Platten (14A) radial mit der Hülle (2) verbunden und senkrecht zur Längsachse der Hülle (2) sind.

3. Leitung nach Anspruch 1, dadurch gekennzeichnet, dass die ersten Platten (14B) mit der Hülle (2) verbunden und parallel zur Längsachse der Hülle (2) sind.

4. Leitung nach Anspruch 2 oder 3, dadurch gekennzeichnet, dass die ersten Platten jeweils in einen Schlitz einer zweiten Platte (13) eingesteckt sind, die vorgesehen ist, um horizontal im Wesentlichen in der zulässigen Tiefe angeordnet zu werden.

5. Leitung nach einem der vorhergehenden Ansprüche, dadurch gekennzeichnet, dass die ersten Platten (14A), 14B) an eine dritte Trägerplatte (11) geschweißt sind, die entlang der oberen Mantellinie der Hülle (2) befestigt ist.

6. Leitung nach Anspruch 1, dadurch gekennzeichnet, dass die ersten Platten (14A) aus Aluminium sind.

7. Leitung nach Anspruch 1, dadurch gekennzeichnet, dass die ersten Platten (14A) aus Stahl sind.

## Claims

1. Buried armored power transmission line comprising in a metal jacket (2) at least one conductive busbar (1A, 1B, 1C), said line being equipped with a cooling device operating by transferring heat from said jacket (2) to the surface of the soil (14) and comprising a metallic structure fixed to said jacket (2) outside the latter and extending towards the surface of said soil (14), characterized in that said structure comprises a plurality of vertical first plates (14A) connected to the jacket (2) and having a vertical dimension such that their top edge is at a permissible calculated depth.

2. The line according to claim 1, characterized in that said first plates (14A) are connected radially to the jacket (2) and perpendicular to the longitudinal axis of the jacket (2).

3. The line according to claim 1, characterized in that said first plates (14B) are connected to the jacket (2) and parallel to the longitudinal axis of the jacket (2).

4. The line according to claim 2 or claim 3, characterized in that said first plates (14A, 14B) are each nested in a slot in a second plate (13) adapted to be disposed horizontally at substantially said permissible depth.

5. The line according to any one of the above claims, characterized in that said first plates (14A, 14B) are welded to a supporting third plate (11) fixed along the top generatrix of the jacket (2).

6. The line according to claim 1, characterized in that said first plates (14A) are made of aluminum.

7. The line according to claim 1, characterized in that said first plates (14A) are made of steel.
